# EUROPEAN PATENT APPLICATION

(11) **EP 1 959 582 A2**
(43) Date of publication of application: **20.08.2008**
(21) Application number: 08001830.2
(22) Date of filing: 31.01.2008
(51) Int. Cl.: H04B 7/005

(54) **Base station receiving circuit**

(30) Priority: 16.02.2007 JP 2007036415
(71) Applicant: NEC Corporation, Minato-ku Tokyo (JP)
(72) Inventor: Kumura, Masayuki, Minato-ku Tokyo 108-8001 (JP)
(74) Representative: Glawe, Delfs, Moll

(57) **Abstract**

The present invention includes: gain controlling and amplifying means for amplifying a signal received from a mobile station and for outputting the amplified received signal; reception quality measuring means for measuring reception quality of the received signal output from the gain controlling and amplifying means; scheduling means for performing scheduling to allocate a radio resource to the mobile station on the basis of a measurement result at the reception quality measuring means; gain controlling means for controlling a gain of the gain controlling and amplifying means on the basis of the received signal output from the gain controlling and amplifying means to keep an amplitude of the received signal constant; and received power calculating means for calculating an estimate of received input power received from a mobile station on the basis of scheduling by the scheduling means; wherein the gain controlling means controls the gain of the gain controlling and amplifying means on the basis of the received signal output from the gain controlling and amplifying means and on the basis of the estimate of received input power calculated by the received power calculating means to keep the amplitude of the received signal output from the gain controlling and amplifying means constant.

## Description

This application is based upon and claims the benefit of priority from Japanese Patent Application No. 2007-36415 filed on February 16, 2007, the content of which is incorporated by reference.

### Background of the Invention

### 1. Field of the Invention

The present invention relates to a base station apparatus applied to a mobile communication system or the like and, in particular, to a receiving circuit in a base station apparatus in a communication system that performs packet transmission in communication such as data communication with multiple mobile stations.

### 2. Description of the Related Art

AGC (Automatic Gain Control) is commonly used in radio receivers in order to accommodate the dynamic range of received input power. A received signal is amplified by an AGC amplifier and the AGC amplifier's output is provided to an AGC amplifier controller. The AGC amplifier controller controls the gain of the AGC amplifier to maintain the output amplitude of the AGC amplifier constant irrespective of the amplitudes of input signals.

Japanese Patent Application Laid-Open No. 2004-336419 discloses a technique for performing the automatic gain control in TDMA (Time Division Multiple Access) communication by using a signal returned from a subscriber station in response to polling.

However, burst traffic occurs often in data communication in a mobile communication system. Related receiving circuits including an AGC circuit have a problem in which the gain of a burst signal received is not properly controlled because of a delay in gain control especially at the leading edge of the signal, resulting in degradation of reception characteristics.

Even with the technique disclosed in Japanese Patent Application Laid-Open No. 2004-336419, it is difficult to perform automatic gain control when signals are transmitted from multiple mobile stations concurrently, therefore degradation of reception characteristics will result, as with the case above.

### Summary of the Invention

An object of the present invention is to provide a base station receiving circuit capable of performing automatic gain control without degrading reception characteristics even when burst traffic occurs.

In order to achieve the object, the present invention includes:
gain controlling and amplifying means for amplifying a signal received from a mobile station and outputting the amplified received signal;
reception quality measuring means for measuring the reception quality of the received signal output from the gain controlling and amplifying means;
scheduling means for performing scheduling to allocate a radio resource to the mobile station on the basis of a measurement result at the reception quality measuring means;
gain controlling means for controlling a gain of the gain controlling and amplifying means on the basis of the received signal output from the gain controlling and amplifying means to keep the amplitude of the received signal constant; and
received power calculating means for calculating an estimate of received input power received from a mobile station on the basis of scheduling by the scheduling means;
wherein the gain controlling means controls the gain of the gain controlling and amplifying means on the basis of the received signal output from the gain controlling and amplifying means and on the basis of the estimate of received input power calculated by the received power calculating means to keep the amplitude of the received signal output from the gain controlling and amplifying means constant.

According to the present invention configured as described above, when an incoming signal from a mobile station is received, the received signal is amplified at the gain controlling and amplifying means and its reception quality is measured at the reception quality measuring means. The scheduling means perform scheduling to allocate a radio resource to the mobile station on the basis of the measurement result at the reception quality measuring means, and the received power calculating means calculates an estimate of received input power received from the mobile station on the basis of the scheduling at the scheduling means. Then, the gain controlling means controls the gain of the gain controlling and amplifying means on the basis of the received signal amplified by the gain controlling and amplifying means and on the basis of the estimate of received input power calculated by the received power calculating means, so that the amplitude of the received signal output from the gain controlling and amplifying means is kept constant.

By using the uplink scheduling function to calculate an estimate of received input power and controlling the gain of the gain controlling and amplifying means of the receiving circuit beforehand in preparation for burst traffic from mobile stations in this way in a base station apparatus of a mobile communication system that performs radio communication between the base station apparatus and mobile stations, the gain of the gain controlling and amplifying means can be quickly converged to a desired value.

The present invention thus configured is capable of converging the gain of the gain controlling and the amplifying means to a desired value quickly and maintaining the quality of communication by controlling the gain beforehand in preparation for a received signal burst that rises steeply.

The above and other objects, features, and advantages of the present invention will become apparent from the following description with reference to the accompanying drawings, which illustrate examples of the present invention.

### Brief Description of the Drawing

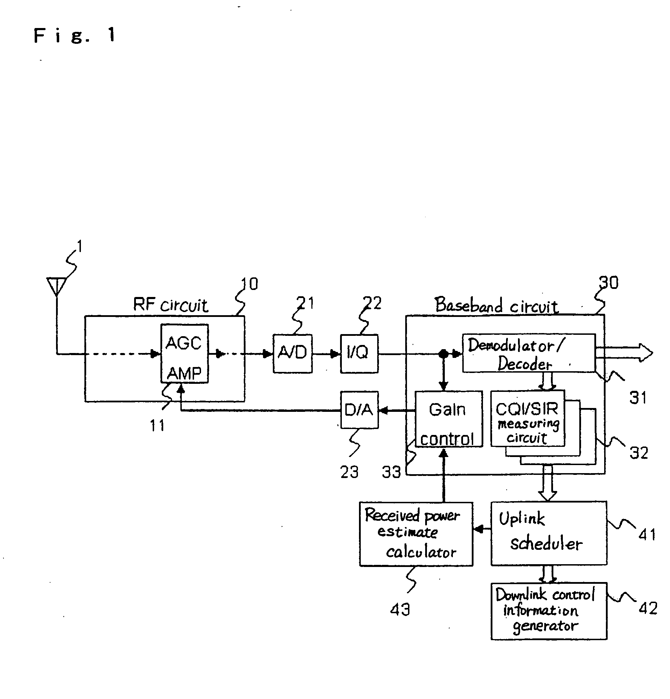

FIG. 1 is a diagram showing an exemplary embodiment of a base station receiving circuit according to the present invention.

### Detailed Description of the Exemplary Embodiment

An exemplary embodiment will be described with reference to the accompanying drawing.

FIG. 1 is a diagram showing an exemplary embodiment of a base station receiving circuit according to the present invention.

As shown in FIG. 1, the present exemplary embodiment includes antenna 1 which picks up an uplink incoming signal from a mobile station, receiving RF circuit 10, baseband circuit 30, A/D converter 21, I/Q quadrature demodulator 22, D/A converter 23, uplink scheduler 41, received power estimate calculator 43 which is received power calculating means, and downlink control information generator 42. Receiving RF circuit 10 includes AGC amplifier 11 which is gain controlling and amplifying means and baseband circuit 30 includes demodulator/decoder 31, CQI/SIR measuring circuit 32 which is reception quality measuring means, and amplifier controller 33.

AGC amplifier 11 amplifies an incoming signal received from a mobile station through antenna 1 and outputs the amplified received signal. CQI/SIR measuring circuit 32 measures a CQI (Channel Quality Indicator) and SIR (Signal to interference Ratio) which represent the reception quality of each mobile station obtained during demodulation and decoding of the received signal in demodulator/decoder 31. Uplink scheduler 41 performs scheduling to allocate a radio resource to each mobile station on the basis of the CQI or SIR of each mobile station measured at CQI/SIR measuring circuit 32. Received power estimate calculator 43 calculates an estimate of received input power received from a mobile station on the basis of the scheduling by uplink scheduler 41. Amplifier controller 33 controls the gain of AGC amplifier 11 on the basis of a received signal demodulated by I/Q-quadrature by I/Q quadrature demodulator 22 and on the basis of an estimate of received input power calculated by received power estimate calculator 43 so that the amplitude of a received signal output from AGC amplifier 11 is kept constant.

An operation of the base station receiving circuit configured as described above will be descried below.

An incoming uplink signal from a mobile station is picked up at antenna 1 and is provided to receiving RF circuit 10. AGC amplifier 11 in receiving RF circuit 10 amplifies the received uplink signal in accordance with the signal range of A/D converter 21 and outputs the amplified received uplink signal.

The received uplink signal output from receiving RF circuit 10 is converted to digital signal at A/D converter 21, then I/Q-quadrature-demodulated at I/Q quadrature demodulator 22, and is provided to baseband circuit 30.

The received uplink signal is modulated and decoded at demodulator/decoder 31 in baseband circuit 30. The CQI or SIR which represents the reception quality of each mobile station obtained during the demodulation and decoding is measured at CQI/SIR measuring circuit 32.

In base stations such as LTE (Long Term Evolution) base stations, uplink scheduling is performed based on the reception quality such as CQI or SIR of each mobile station obtained during demodulation/decoding of received signals to allocate uplink radio resources to the mobile stations in such a manner that the radio resources as a whole can be efficiently used. Uplink scheduler 41 performs scheduling to allocate radio resources to mobile stations based on the CQI or SIR of each mobile station measured at CQI/SIR measuring circuit 32.

Because future received input power to be received at the base station apparatus from a mobile station can be estimated once an uplink signal is sent from each mobile station as scheduled by uplink scheduler 41, an estimate of future received input power to be received from the mobile station is calculated at received power estimate calculator 43 on the basis of scheduling by uplink scheduler 41 and is provided to amplifier controller 33.

Amplifier controller 33 controls the gain of AGC amplifier 11 on the basis of the received signal demodulated by I/Q-quadrature by I/Q quadrature demodulator 22 and on the basis of the estimate of received input power calculated at received power estimate calculator 43 so that the output amplitude of AGC amplifier 11 is kept constant irrespective of the amplitudes of incoming signals received through antenna 1.

While a preferred embodiment of the present invention has been described using specific terms, such description is for illustrative purposed only, and it is to be understood that changes and variations may be made without departing from the sprit or scope of the following claims.

## Claims

1. A base station receiving circuit comprising:
gain controlling and amplifying means for amplifying a signal received from a mobile station and outputting the amplified received signal;
reception quality measuring means for measuring reception quality of the received signal output from the gain controlling and amplifying means;
scheduling means for performing scheduling to allocate a radio resource to the mobile station on the basis of a measurement result at the reception quality measuring means;
gain controlling means for controlling a gain of the gain controlling and amplifying means on the basis of the received signal output from the gain controlling and amplifying means to keep an amplitude of the received signal constant; and
received power calculating means for calculating an estimate of received input power received from a mobile station on the basis of scheduling by the scheduling means;
wherein the gain controlling means controls the gain of the gain controlling and amplifying means on the basis of the received signal output from the gain controlling and amplifying means and on the basis of the estimate of received input power calculated by the received power calculating means to keep the amplitude of the received signal output from the gain controlling and amplifying means constant.

2. The base station receiving circuit according to claim 1,
wherein the reception quality measuring means measures a signal to interference ratio of the received signal; and
the scheduling means allocates a radio resource to the mobile station on the basis of the signal to interference ratio measured by the reception quality measuring means.
